# EUROPEAN PATENT APPLICATION

(11) **EP 3 000 799 A1**
(43) Date of publication of application: **30.03.2016**
(21) Application number: 13885328.8
(22) Date of filing: 04.06.2013
(51) Int. Cl.: C06D 5/00, C06B 23/00, B60R 21/00

(54) **GAS GENERATING AGENT COMPOSITION HAVING REDUCED SOLID DISCHARGE AMOUNT OF INFLATOR**

(30) Priority: 21.05.2013 KR 20130057024
(71) Applicant: Samsong Industries Ltd., Seoul 137-894 (KR)
(72) Inventor: YOON, Ji-Hae, Boeun-gun Chungcheongbuk-do 376-812 (KR); LEE, Young-Ho, Boeun-gun Chungcheongbuk-do 376-812 (KR); LEE, Seung-Jae, Boeun-gun Chungcheongbuk-do 376-812 (KR)
(74) Representative: Wunderlich, Rainer
(86) International application number: PCT/KR2013/004900
(87) International publication number: WO 2014/189167

(57) **Abstract**

A gas generating agent for an inflator is an explosive composition required for expanding an airbag to protect passengers when a car accident occurs. An electrical signal detected by a sensor due to a car crash may cause the ignition and combustion of an igniter, an ignition charge, and a gas generating agent of the inflator in order. Gases and a high-temperature melting compound generated by the combustion of the gas generating agent are cooled and filtered through a filter to expand the airbag. In order for the high-temperature melting compound to be effectively cooled and filtered through the filter, the high-temperature melting compound must be converted into slag. In the present invention, by converting the high-temperature melting compound into the slag by using zeolite [Na4Al4Si4O25H18] or dolomite [CaMg(CO₃)₂] as a slag forming agent, and allowing an amount of combustion residuals discharged into the interior of the airbag during the operation of the inflator to be equal to or less than 1g, which is a standard value specified in USCAR-24, damage to the airbag can be prevented and passengers can be effectively protected.

## Description

### [Technical Field]

The present invention relates to a gas generating agent composition for an inflator, capable of inflating an airbag with a gas burnt and generated by a signal detected when a car accident occurs, and more particularly, to a gas generating agent composition having combustion characteristics exhibiting ideal bag development pressure and maintaining time by generating a large amount of gas harmless to a human body with an appropriate combustion rate when an inflator is developed, and generating a slag-type product. This application claims the benefit of earlier filing date and right of priority to Korean Application No. 10-2013-0057024, filed on May 21, 2013, the contents of which is incorporated by reference herein in its entirety.

### [Background Art]

A gas generating agent for an inflator used in an airbag installed for the purpose of protecting passengers in a vehicle generally includes a fuel having a nitrogeneous organic compound burnt, as a principal ingredient, to generate a large amount of nitrogen gas and an oxidizing agent providing oxygen required for combustion and minimizing a generated toxic gas (CO or NOx). An initial gas generating agent for airbag selectively uses an azidated metal compound such as azidated sodium or azidated potassium as a fuel component; however, this material has a problem of being decomposed in the presence of water or acid to generate azidated hydroacid of high toxicity, as well as being exploded due to impact or frictional contact.

In order to basically resolve the risk and toxicity of the azidated gas generating agent, the azide-based gas generating agent has been switched to a nonazide-based gas generating agent. The existing nonazide-based gas generating agent, however, has shortcomings of having poor combustibility, compared with the azide-based gas generating agent. An inflator using such a nonazide-based gas generating agent needs to have a structure of increasing internal pressure for facilitating combustion. Here, a change in a material of an inflator housing and each component and an increase in weight in consideration of such a structure increases cost, and thus, combustibility of the gas generating agent is improved using a combustion adjusting agent and a catalyst instead.

A gas generated according to combustion of a gas generating agent in an inflator to inflate an airbag. In the process of burning a gas generating agent, melted high temperature compounds are discharged together with the gas, and such compounds need to be cooled and filtered as solid slag. Thus, the inflator has a structure of using a high density filter in order to discharge combustion residues in an amount of equal to or less than 1g (based on USCAR-24) as a set reference value when developed. Also, the gas generating agent uses a slag forming agent to allow melted compounds generated during a combustion process to be converted into slag so as to be effectively filtered.

Flag forming agents used in the related art includes Japanese acid clay, hydrotalcite, aluminium nitride, silicon nitride, aluminium oxide, silicon dioxide, titanium dioxide, boron oxide, glass, bentonite clay, borosilicate, aluminosilicate, magnesium silicate, ferric Silicate, and aluminium hydroxide, and examples thereof are as follows.

In Embodiment 1 of U.S. Patent No. 6454887 B1 (September 24, 2002), 35 wt% of nitroguanidine as fuel, 50 wt% of strontium nitrate as an oxidizing agent, 10 wt% of sodium salt of carboxylmethyl cellulose (CMC) as a binder, and 5 wt% of acid clay (Japanese clay) as a slag forming agent are used.

In Embodiment 1 of U.S. Patent No. 6287400 B1 (September 11, 2001), 47.58 wt% of guanidine nitrate as fuel, 37.41 wt% of copper diamine dinitrate as an oxidizing agent, 5.1 wt% of silicon dioxide as a slag forming agent, and 9.91 wt% of ammonium nitrate as an auxiliary oxidizing agent are used.

In Embodiment 3 of U.S. Patent No. 6143104 A1 (November 7, 2000), 10.7 wt% o dicyandiamide as fuel, 30.4 wt% of ammonium nitrate as an oxidizing agent, 54.9 wt% of sodium nitrate, and 4 wt% of aluminum oxide as a slag forming agent are used.

As described above, the compositions of the related art gas generating agents use various slag forming agents in order to convert a melting compound generated during a combination process into slag. However, when such gas generating agents are applied to an inflator and the inflator is developed, a weight of a combustion residue discharge to the interior of an airbag may exceed the USCAR-24 reference. Thus, in order to filter slag, a filter needs to become more dense and to be increased in size, an overall volume and weight of the inflator may be increased, increasing cost thereof.

### [Disclosure]

### [Technical Problem]

The present invention has been made to solve the above-mentioned problems occurring in the prior art, and an aspect of the present invention provides a gas generating agent composition capable of timely inflating an airbag with a gas generated in combustion and effectively converting a melting compound produced during the combustion process into a slag material that can be easily filtered by using a new slag forming agent.

Another aspect of the present invention provides an inflator manufactured using the gas generating agent composition.

### [Technical Solution]

According to an aspect of the present invention, there is provided a gas generating agent composition for an inflator including fuel, combustion rate-increasing fuel, an oxidizing agent, an auxiliary oxidizing agent, a catalyst, a slag forming agent, and an additive, wherein zeolite [Na₄Al₄Si₄O₂₅H₁₈] or dolomite [CaMg(CO₃)₂] is used as the slag forming agent and wherein the gas generating agent composition includes 30 to 50 wt% of fuel, 3 to 20 wt% of combustion rate-increasing fuel, 35 to 55 wt% of an oxidizing agent, 5 to 10 wt% of an auxiliary oxidizing agent, 0.5 to 5.0 wt% of a catalyst, and 0.5 to 5.0 wt% of zeolite [Na₄Al₄Si₄O₂₅H₁₈] or dolomite [CaMg(CO₃)₂] as a slag forming agent, and 0.2 to 1.0 wt% of an additive, with respect to a total weight of the gas generating agent composition.

According to another aspect of the present invention, there is provided an inflator manufactured using the gas generating agent composition.

### [Advantageous Effects]

According to an embodiment of the present invention, the gas generating agent composition may timely inflate an airbag with a gas generated in combustion and effectively converting a melting compound produced during the combustion process into slag to satisfy an amount of combustion residues discharged to the interior of the airbag after testing an inflator 60L tank, to be equal to or less than 1 g (USCAR-24 reference) as a preset reference value.

Also, the inflator using the gas generating agent according to an embodiment of the present invention reduces high temperature particles causing damage to an airbag when the airbag is developed, a driver and a passenger may be reliably protected. In addition, since the gas generating agent has a sufficiently high combustion rate even at minimum pressure within the inflator, a range for selecting a component which has a small thickness, a less weight, and is formed of a low-priced material may be widened.

Thus, the inflator manufactured using the gas generating agent composition of the present invention may inflate an airbag by timely generating a gas when a car accident occurs and reduce a risk of damaging the airbag due to high temperature particles generated during combustion process of the gas generating agent, so protect a driver and a passenger reliably.

### [Description of Drawings]

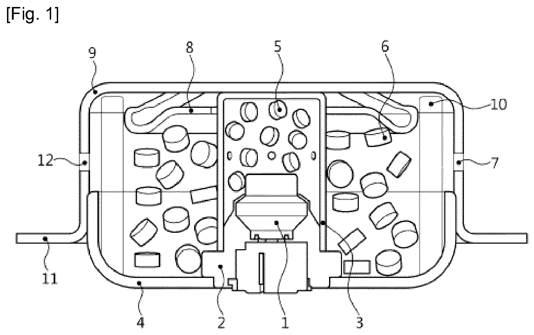

FIG. 1 is a cross-sectional view illustrating an internal structure of an inflator 60L tank manufactured using a gas generating agent composition of the present invention.

### [Best Modes]

Hereinafter, the present invention will be described in detail.

A gas generating agent composition of the present invention includes fuel, combustion rate-increasing fuel, an oxidizing agent, an auxiliary oxidizing agent, a catalyst, a slag forming agent, and an additive.

The fuel included in the gas generator composition of the present invention is not particularly limited and any fuel may be used as long as it is generally used in a gas generating agent composition in the art. Examples thereof are as follows.

High nitrogen compounds: Triazole, Tetrazole, Bitetrazole, Aminotetrazole, 5-aminotetrazole, 1,2,4-triazole-5-one, Azotetrazole, Ammonium 5-nitraminotetrazole, Triaminoguanidinium 5-nitraminotetrazole, Aminoguanidinium 5,5-bitetrazole, Guanidinium 5,5'-bitetrazole, Strontium salt of 5-aminotetrazole, potassium salt of 5-aminotetrazole, Nitrotriazalone (NTO, 5-nitro-1,2,4-trizal-3-one), Disodium bitetrazole, Dipotassium bitetrazole, Calcium bitetrazole, Aminotetrazole hydrate, Azodicarbonamide, 2,4-diamino-6phenyl-triazine, Urea, Aminoguanidine, Nitroaminoguanidine, Guanidine nitrate, Guanidinium 5-aminotetrazole, N-methylaminoanthraquinone, Melamine, Guanylamino-5-tetrazole, Guanyl-3-tetrazolyl-5-guanidine, 2,4-d iam ino-6-phenyl-5-triazine, 5-aminotetrazole hydrate, 5-oxo-3-nitro-1,2,4-triazole, Dicyandiamide, Dihydrazinium 3,6-bis(5-tetrazolyl)-1,2-dihydrotetrazine, Dinitrosopentamethylenetetramine, a reaction product between glyoxal and Hydrazine, ammonium salt of 5-nitramino tetrazole, 5-nitramino tetrazole, Sodium tetrazole, alkali metal salt of 5-aminotetrazole, alkali metal salt of Tetrazole, alkali metal salt of Bitetrazole, alkali metal salt of 3-nitro-1,2,4-triazol-5-one (alkali metal included in the alkali metal salt is potassium, sodium, or lithium), Potassium diliturate [C₄H₂N₃O₅K], Zinc(5-aminotetrazole) [Zn(5-aminotetrazole)₂:C₂H₄N₁₀Zn], Potassium nitroorotate [C₅H₄N₃O₇K], a zinc compound of 5- aminotetrazole, a zinc compound of 3-amino-1,2,4-triazol, and Guanidine carbonate.

Explosives and nitrocompounds : Nitrocellulose, Nitroglycerine, Cyclotetramethylenetetranitramine (Octogen,HMX), Cyclotrimethylenetrinitramine (Hexogen,RDX), Pentrite (pentaerythritoltetranitrate, 1-(N-alkylnitramino)-2-nitroxyethane), Nitropiperidine, Nitroguanidine, Nitropolystyrene, Polynitrophenols, Polynitrocresols 2,4-Dinitrophenoxylethanol, Triaminotrinitrobenzene, Diaminotrinitrobenzene, Dinitrophenoxyethanol, 2,4-Dinitrophenyl ether, Ammonium picrate, 2:4 dinitroresorcinol, 2:4:6 trinitro-resorcinol, 4:6 dinitro-orthocresol, 3:5 dinitro-catechol, 2:6 dinitro-paracresol, 3:5 dinitro-salicylic acid, Tetracene, Potassium 5-nitrobarbiturate, 5-nitrobarbituric acid, Dinitrobenzene, Dinitrotoluene, Dinitrophenyl ether, Dinitrostilbene, Dinitrophenyl allyl ether, Dinitrophenyl propyl ether, Dinitroanisole, Bis(dinitrophenyl) propyl ether, Bis(dinitrophenyl) triglycol ether, 2,4-Dinitrodiphenyl ether, 2,4-Dinitrotoluene, Dinitrophenyl allyl ether, Triethylene glycol di-2-ethylbutyrate, Ethylene dinitramine, and Trinitrotoluene.

Other fuel materials include Energetic polymers, Nitrates, metal/nonmetal fuel, Nitrides, Metal cyanamides, Metal acetates, Metal formats, Metal oxalates, and Organic acetates.

As the fuels included in the gas generating agent composition, preferably, Guanidine nitrate is used.

In the gas generating agent composition, fuel may be contained in an amount of 30 to 50 wt% with respect to a total weight of the gas generating agent composition. If fuel is contained less than 30 wt%, a generated gas amount may be reduced. If fuel exceeds 50 wt%, an amount of carbon monoxide (CO) of the gas product may be increased.

Also, the composition of the present invention may further include combustion rate-increasing fuel (auxiliary fuel) to improve a combustion rate and combustibility. As the combustion rate-increasing fuel, preferably, 5-Aminotetrazole may be used. The combustion rate-increasing fuel serves to increase the content of a nitrogen gas in the generated gas and increase a combustion rate of the composition. However, since the combustion rate-increasing fuel increases a combustion temperature of the gas generating agent, a usage amount of the combustion rate-increasing fuel preferably ranges from 3 to 20 wt% with respect to the total weight of the gas generating agent composition of the present invention.

An oxidizing agent included in the gas generating agent composition of the present invention is not particularly limited and any oxidizing agent may be used as long as it is used in the gas generating agent composition. For example, the oxidizing agents may be Nitrates, Chlorates, Perchlorates, Oxides, Peroxides, Sulfur, Sulfides and Sulfates, Hexanitrocobaltates, Halogens, Chlorites, Chromates, and inorganic compounds having Poly(nitrito) transition metal complex anion.

The Nitrates may be, for example, basic copper nitrate.

In the gas generating agent composition of the present invention, the oxidizing agent may be contained in an amount of 35 to 55 wt%, compared with the total weight of the composition. If the oxidizing agent is contained less than 35 wt%, an amount of carbon monoxide (CO) of the gas product is increased and a combustion rate is reduced. If the oxidizing agent exceeds 55 wt%, a generated gas amount and a combustion rate are reduced.

In order to complement an insufficient gas amount or insufficient oxygen, an auxiliary oxidizing agent may be used to complement the insufficient gas amount or oxygen, and preferably, a Phase stabilized ammonium nitrate (PSAN) may be used. The PSAN is prepared by mixing Ammonium nitrate and Potassium nitrate in a predetermined ratio, and a result of thermal analysis using Differential Scanning Calorimetry showed that a phase change did not occur in regions around 32°C and 84°C of the ammonium nitrate, and thus, PSAN may be used. Even though the gas generating agent composition pressed and molded using PSAN is exposed to a temperature change, a degradation of strength, collapse, and abnormal combustion possibility due to repeated expansion and contraction of a volume is minimized, and thus, PSAN has excellent long-term storage characteristics, and thus, PSAN is appropriate for the gas generating agent composition.

A usage amount of the auxiliary oxidizing agent with respect to the total weight of the gas generating agent composition of the present invention preferably ranges from 5 to 10 wt%, and in a range exceeding 10 wt%, a combustion rate may be reduced and a volume of a gas generator tablet may be changed in a heat resistance test for 408 hours at 107 °C .

An average particle diameter of the fuel and the oxidizing agent included in the gas generating agent composition of the present invention is preferably 50µm or less, and more preferably 15µm or less, and thus, the fuel and the oxidizing agent may be wet-crushed by an alumina media in a ball mill and dried to be used.

A catalyst is used to serve to adjust a combustion rate and a pressure index in the gas generating agent composition of the present invention. Any catalyst may be used as the catalyst without limitation as long as it is used in the art, and examples of the catalyst are as follows.

Oxides: Fumed metal oxide (Silica, Alumina, or Titania), finely dispersed Colloidal SiO₂.

Metals/nonmetals: finely dispersed Carbon black, iron, steel, Platinum, and Asbestos.

Organic compounds: Dibutyltin dilaurate, Vanadyl acetylacetonate, Vanadyl N-(2-hydroxyphenyl) Saliccylideneimine, Vanadyl 2-methyl-5-Tetrazolecarboxylideneimine, Zirconium acetylacetonate, Aluminium acetylacetonate, Nickel acetylacetonate, titanyl acetylacetonate, Cupric acetylacetonate, Lead acetylacetonate, Guanidinium chromate, Guanidinium dichromate, Ammonium dichromate, Sodium barbiturate, Alkali metal aminobenzoate (sodium anthranilate), and Prussian blue.

Inorganic compounds: Vanadium pentoxide (V₂O₅), Copper chromate, Potassium dichromate, Vanadium oxides, Vanadium compound, Metallic molybdenum, Molybdic acid, Molybdic oxide, Ammonium molybdate, and Cobalt chromate.

Preferably, a metal oxide, in particularly, a mixture catalyst of a ferric oxide (Fe₂O₃) and carbon black, may be used as a catalyst. The catalytic material serves to increase the combustion rate of the gas generating agent composition, and when two types of catalysts are simultaneously used together, rather than when the two types of catalysts are separately used, a combustion rate is significantly increased and a pressure index is lowered together.

An average particle diameter of the catalyst is preferably 2µm or less, and more preferably, 0.5 to 1µm. Also, a usage amount of the catalyst preferably ranges from 0.5 to 5.0 wt% with respect to the total weight of the gas generating agent composition of the present invention, and if the usage amount of the catalyst exceeds 5.0 wt%, a combustion rate may be reduced.

Zeolite [Na₄Al₄Si₄O₂₅H₁₈] or Dolomite [CaMg(CO₃)₂] as slag forming agents of the present invention, are natural materials and have high absorbability even at high temperatures, facilitating formation of slag, and since these materials have a large surface area, a combustion rate may be increased through a catalytic reaction. In this manner, in the present invention, since the gas generating agent composition capable of increasing a slag conversion rate of a melting product during combustion and increasing a combustion rate is provided to an inflator, a size and weight of an overall system, as well as a filter, may be reduced and a low-priced material can be used.

In the present invention, since Zeolite [Na₄Al₄Si₄O₂₅H₁₈] or Dolomite [CaMg(CO₃)₂] is used as a slag forming agent, slag formation is increased from a reaction with a solid and liquid material generated during combustion, and a combustion rate is also increased. A usage amount of the slag forming agent of the present invention preferably ranges from 0.5 to 5.0 wt% with respect to the total weight of the gas generating agent composition. If the usage amount of the slag forming agent exceeds 5.0 wt%, a generated gas amount and a combustion rate are reduced. If the usage amount of the slag forming agent is less than 0.5 wt%, the effect of forming slag is not sufficient. Also, an average particle diameter of the slag forming agent preferably ranges from 0.5 to 5µm. If the average particle diameter of the slag forming agent is less than 0.5µm, the particle size is too small to be prepared, increasing cost, and if the average particle diameter of the slag forming agent exceeds 5µm, the particle size is so large that efficiency of the catalyst or the slag forming agent is degraded.

The present invention may include a lubricant to improve moldability and liquidity in preparing a gas generating agent. As the lubricant, Molybdenum sulfide (MoS₂), Boron Nitride, Graphite, Aluminum Stearate, Magnesium Stearate, Zinc Stearate, or Calcium Stearate and so on may be used. A usage amount of the additive preferably ranges from 0.2 to 1.0 wt% with respect to the total weight of the composition.

Hereinafter, a method of preparing a gas generating agent of the present invention will be described.

An oxygen balance, a reaction heat, a reaction temperature, and a generated gas amount for preparing a gas generating agent are theoretically calculated according to a composition ratio of a composition so as to be obtained.

As for the gas generating agent composition of the present invention, the aforementioned components were dry-mixed in a ball mill or a three-dimensional (3D) mixer. An average particle diameter of the mixed gas generating agent composition preferably ranges from 5 to 15µm. The average particle diameter is an average particle diameter when all the mentioned components are mixed according to the composition ratio, and thus, an actual particle diameter may be distributed to range from 0.1 to 20µm. After dried, the mixed gas generating agent composition was compressed by a rotary pressing machine to obtain a gas generating agent tablet. The gas generating agent tablet of the present invention has an appropriate combustion rate and preferably has a specific gravity of 1.8g/cm³ or greater and crushing strength of 7kgf or greater in order to prevent damage of the tablet when stored for a long period of time.

Hereinafter, a structure of an inflator using the gas generating agent of the present invention will be described briefly with reference to FIG. 1. The inflator includes an igniter 1 primarily ignited by an electrical signal when a car accident occurs, an igniter holder 2 supporting the igniter 1, an ignition charge 5 igniting a gas generating agent 6 secondarily, an ignition charge cup 3 accommodating the ignition charge 5, a diffuser 9 having a gas outlet 7, a filter 10 or heat sink 10 positioned within the diffuser 9, accommodating the gas generating agent 6, removing a combustion product, and cooling a combustion gas, a retainer 8 as a component for fixing the gas generating agent 6, a flange 11 as a portion connected to an airbag, a sealing tape 12 used to prevent moisture absorption of the gas generating agent 6, and a closer 4 fixing and accommodating the components and serving as a combustion chamber.

In order to perform a 60L tank test with respect to the gas generating agent composition of the present invention in the inflator described above, the inflator filled with the gas generating agent compositions according to Embodiments 1 to 5 of the present invention and Comparative Examples 1 to 3 were installed and developed, and a change in pressure within the tank was measured over time. Also, a discharge residual amount is a value obtained by collecting residues formed as a material generated after the combustion of the gas generating agent composition is not filtered by a filter but discharged to the interior of the tank, and measuring a weight of the residues.

### [Mode For Invention]

Hereinafter, the present invention will be described in more detail through embodiments. These embodiments are merely illustrative of the present invention, so the scope of the present invention is not limited by these embodiments.

### Embodiment 1

40.85 wt% of Guanidine nitrate, 41.70 wt% of Basic Copper Nitrate (BCN), 10 wt% of 5-Aminotetrazole, 5 wt% of Phase stabilized ammonium nitrate (PSAN), 0.5 wt% of Zeolite, 1 wt% of Ferric oxide (Fe₂O₃), 0.75 wt% of Carbon Black, and 0.2 wt% of Calcium Stearate were mixed and dried at 70°C for four hours. An average particle diameter of the gas generating agent mixture ranged from 10 to 15µm. The dried gas generating agent mixture was pressed by a pressing machine to obtain a gas generating agent tablet having a diameter of 6mm and a height of 2.4mm, and the tablet was charged in an inflator. According to a result of 60L tank test, a discharged residual amount was 0.3g. Zeolite having an average particle diameter ranging from 0.5 to 5µm and the other raw materials having a particle size of 15µm or less were used.

### Embodiment 2

A gas generating agent was prepared by mixing 36.48 wt% of Guanidine nitrate, 41.02 wt% of Basic Copper Nitrate (BCN), 7.5 wt% of 5-Aminotetrazole, 7.5 wt% of Phase Stabilized Ammonium Nitrate (PSAN), 5 wt% of Zeolite, 1.5 wt% of ferric oxide (Fe₂O₃), 0.8 wt% of Carbon Black, and 0.2 wt% of Calcium Stearate in the same manner as that of Embodiment 1 and applied to an inflator. According to a result of 60L tank test, a discharged residual amount was 0.2g. Zeolite having an average particle diameter ranging from 0.5 to 5µm and the other raw materials having a particle size of 15µm or less were used.

### Embodiment 3

A gas generating agent was prepared by mixing 41.18 wt% of Guanidine nitrate, 41.37 wt% of Basic Copper Nitrate (BCN), 10 wt% of 5-Aminotetrazole, 5 wt% of Phase Stabilized Ammonium Nitrate (PSAN), 0.5 wt% of Dolomite, 1 wt% of Ferric oxide (Fe₂O₃), 0.75 wt% of Carbon Black, and 0.2 wt% of Calcium Stearate in the same manner as that of Embodiment 1 and applied to an inflator. According to a result of 60L tank test, a discharged residual amount was 0.5g. Dolomite having an average particle diameter ranging from 0.5 to 5µm and the other raw materials having a particle size of 15µm or less were used.

### Embodiment 4

A gas generating agent was prepared by mixing 35.86 wt% of Guanidine nitrate, 41.44 wt% of Basic Copper Nitrate (BCN), 7.5 wt% of 5-Aminotetrazole, 8 wt% of Phase Stabilized Ammonium Nitrate (PSAN), 5 wt% of Dolomite, 1 wt% of Ferric oxide (Fe₂O₃), 1 wt% of Carbon Black, and 0.2 wt% of Calcium Stearate in the same manner as that of Embodiment 1 and applied to an inflator. According to a result of 60L tank test, a discharged residual amount was 0.1g. Dolomite having an average particle diameter ranging from 0.5 to 5µm and the other raw materials having a particle size of 15µm or less were used.

### Embodiment 5

A gas generating agent was prepared by mixing 41.12 wt% of Guanidine nitrate, 43.18 wt% of Basic Copper Nitrate (BCN), 3 wt% of 5-Aminotetrazole, 5 wt% of Phase Stabilized Ammonium Nitrate (PSAN), 4.5 wt% of Dolomite, 1.5 wt% of Ferric oxide (Fe₂O₃), 1.5 wt% of Carbon Black, and 0.2 wt% of Calcium Stearate in the same manner as that of Embodiment 1 and applied to an inflator. According to a result of 60L tank test, a discharged residual amount was 0.3g. Dolomite having an average particle diameter ranging from 0.5 to 5µm and the other raw materials having a particle size of 15µm or less were used.

### Comparative Example 1

42.29 wt% of guanidine nitrate, 45.76 wt% of Basic Copper Nitrate (BCN), 5 wt% of 5-Aminotetrazole, 5 wt% of Phase Stabilized Ammonium Nitrate (PSAN), 1 wt% of Silicon dioxide, 0.75 wt% of Carbon Black, and 0.2 wt% of Calcium Stearate were mixed and dried at 70°C for four hours. An average particle size of the dried gas generating agent mixture ranged from 10 to 15µm. The dried gas generating agent mixture was pressed by a pressing machine to obtain a gas generating agent tablet having a diameter of 6mm and a height of 2.4mm, and the tablet was charged in an inflator. According to a result of 60L tank test, a discharged residual amount was 0.7g. Raw materials having a particle size of 15µm or less were used.

### Comparative Example 2

A gas generating agent was prepared by mixing 43.03 wt% of Guanidine Nitrate, 45.02 wt% of Basic Copper Nitrate (BCN), 5 wt% of 5-Aminotetrazole, 5 wt% of Phase Stabilized Ammonium Nitrate (PSAN), 1 wt% of Titanium dioxide, 0.75 wt% of Carbon Black, and 0.2 wt% of Calcium Stearate in the same manner as that of Comparative Example 1 and applied to an inflator.

According to a result of 60L tank test, a discharged residual amount was 2.3g, very large. Raw materials having a particle size of 15µm or less were used.

### Comparative Example 3

A gas generating agent was prepared by mixing 41.45 wt% of Guanidine Nitrate, 46.10 wt% of Basic Copper Nitrate (BCN), 5 wt% of 5-Aminotetrazole, 5 wt% of Phase Stabilized Ammonium Nitrate (PSAN), 1.25 wt% Ferric oxide (Fe₂O₃), 1 wt% of Carbon Black, and 0.2 wt% of Calcium Stearate in the same manner as that of Comparative Example 1 and applied to an inflator. According to a result of 60L tank test, a discharged residual amount was 1.3g. Raw materials having a particle size of 15µm or less were used.

Table 1 below shows the composition ratios of Embodiments 1 to 5 and Comparative Examples 1 to 3 and results of 60L tank test of the inflators employing the same.

**[Table 1]**

| Classification | | Embodiment 1 | Embodiment 2 | Embodiment 3 | Embodiment 4 | Embodiment 5 | Comparative Example 1 | Comparative Example 2 | Comparative Example 3 |
|---|---|---|---|---|---|---|---|---|---|
| Composition | BCN | 41.70 | 41.02 | 41.37 | 41.44 | 43.18 | 45.76 | 45.02 | 46.10 |
| | PSAN | 5.00 | 7.50 | 5.00 | 8.00 | 5.00 | 5.00 | 5.00 | 5.00 |
| | GN | 40.85 | 36.48 | 41.18 | 35.86 | 41.12 | 42.29 | 43.03 | 41.45 |
| | 5-AT | 10.00 | 7.50 | 10.00 | 7.50 | 3.00 | 5.00 | 5.00 | 5.00 |
| | Fe₂O₃ | 1.00 | 1.50 | 1.00 | 1.00 | 1.50 | - | - | 1.25 |
| | Zeolite | 0.50 | 0.50 | - | - | - | - | - | - |
| | Dolom ite | - | - | 0.50 | 5.00 | 4.50 | - | - | - |
| | SiO₂ | - | - | - | - | - | 1.00 | - | - |
| | TiO₂ | - | - | - | - | - | | 1.00 | - |
| | Carbon black | 0.75 | 0.80 | 0.75 | 1.00 | 1.50 | 0.75 | 0.75 | 1.00 |
| | Calcium stearate | 0.20 | 0.20 | 0.20 | 0.20 | 0.20 | 0.20 | 0.20 | 0.20 |
| 60L tank test discharge residual amount (g) of inflator | | 0.3 | 0.2 | 0.5 | 0.1 | 0.3 | 0.7 | 2.3 | 1.3 |

| | | | | | | | | | |
|---|---|---|---|---|---|---|---|---|---|
| In Table 1 above, 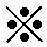 BCN = Basic Copper Nitrate = Phase-Stabilized Ammonium Nitrate GN = Guanidine Nitrat 5-AT = Aminotetrazole | | | | | | | | | |

After inflators were manufactured using the gas generating agent compositions according to Comparative Examples 1 and 2 using silicon dioxide (SiO₂) and the titanium dioxide (TiO₂), the inflators were undergone 60L tank test. Discharged combustion residual amounts were 0.7g and 2.3g, respectively, very large. In contrast, according to results of verifying performance through 60L tank test by applying the gas generating agent compositions according to Embodiments 1 to 5 of the present invention to the inflator having the same system structure, performance of the inflator required for an airbag was improved and an amount of combustion residues discharged to the interior of the tank was reduced to 0.5g or less.

### [Description of reference numerals]

1: igniter 2: igniter holder 3: ignition charge cup
4: closer 5: ignition charge 6: gas generating agent
7: gas outlet 8: retainer 9: diffuser
10: heat sink/filter 11: flange 12: sealing tape

## Claims

1. A gas generating agent composition for an inflator including fuel, combustion rate-increasing fuel, an oxidizing agent, an auxiliary oxidizing agent, a catalyst, a slag forming agent, and an additive, wherein Zeolite [Na₄Al₄Si₄O₂₅H₁₈] or dolomite [CaMg(CO₃)₂] is used as the slag forming agent and wherein the gas generating agent composition includes 30 to 50 wt% of fuel, 3 to 20 wt% of combustion rate-increasing fuel, 35 to 55 wt% of an oxidizing agent, 5 to 10 wt% of an auxiliary oxidizing agent, 0.5 to 5.0 wt% of a catalyst, and 0.5 to 5.0 wt% of Zeolite [Na₄Al₄Si₄O₂₅H₁₈] or Dolomite [CaMg(CO₃)₂] as a slag forming agent, and 0.2 to 1.0 wt% of an additive, with respect to a total weight of the gas generating agent composition.

2. The gas generating agent composition of claim 1, wherein an average particle diameter of Zeolite [Na₄Al₄Si₄O₂₅H₁₈] or Dolomite [CaMg(CO₃)₂] ranges from 0.5 to 5µm.

3. An inflator manufactured using the gas generating agent composition of claim 1 or 2.
